# EUROPEAN PATENT APPLICATION

(11) **EP 1 630 322 A1**
(43) Date of publication of application: **01.03.2006**
(21) Application number: 04731639.3
(22) Date of filing: 07.05.2004
(51) Int. Cl.: E04F 17/02, F23J 13/04, F16L 25/00

(54) **IMPROVEMENTS TO AN IMPERVIOUS CONNECTION SYSTEM FOR CHIMNEYS AND PREFABRICATED MODULAR DUCTS**

(30) Priority: 09.05.2003 ES 200301067
(71) Applicant: Dinak S.A., 36216 Vigo (ES)
(72) Inventor: PEREIRO SANTOS, Juan Ramón, E-36216 Vigo (ES)
(74) Representative: Temino Ceniceros, Ignacio
(86) International application number: PCT/ES2004/000203
(87) International publication number: WO 2004/099531

(57) **Abstract**

The invention relates to improvements to an impervious connection system for chimneys and prefabricated modular ducts. The invention consists in using a metal/metal fitting without complementary synthetic gaskets. According to the invention, one of the modules to be joined (8) terminates in a truncated-cone-shaped section (3) and the cylindrical end of the other module (11) is connected thereto in a tongue-and-groove manner. The improvements consist in extending the aforementioned truncated-cone-shaped section (3) into a wide cylindrical section (9) comprising one or more annular flanges (10-10') defining two annular tangential lines which provide a pressure connection with the other module (11) at essentially-cylindrical areas, thereby maintaining the imperviousness and the axial stability between said modules.

## Description

### OBJECT OF THE INVENTION

This invention is a series of improvements that have been made to an impervious connection system for chimneys and prefabricated modular ducts that are the object of the patent for invention P200201060.

The object of the invention is to achieve optimum imperviousness guarantees, without making any modifications to the essential nature of the aforementioned connection system.

### BACKGROUND TO THE INVENTION

In the patent for invention P200201060, a description is given of an impervious connection system for chimneys and prefabricated modular ducts, which is based upon the metal-to-metal fit without supplementary joints made of synthetic materials, in which at least one of the ends of the connection is truncoconical and it is connected to the other end by socketing, connecting both overlapping surfaces by means of one or more annular tangential lines or small annular contact surfaces, all with an axial pressure that is exerted when the connection process takes place.

Different options are established for carrying out the socketed connection as from this basic system in the patent for invention P200201060, but all of these options share a common denominator in the sense that the annular tangential line or lines lie on imaginary truncoconical planes.

### DESCRIPTION OF THE INVENTION

The improvements that the invention proposes, while not make any modifications to the essential nature of the patent for invention P200201060 regarding the metal-to-metal fit without supplementary impervious joints, on the one hand establish a solution that is structurally simpler and thus more economical for the truncoconical connection, and on the other hand guarantee greater mechanical stability for the joint, by combining the truncoconical connection with a cylindrical connection, the latter having a considerable radial pressure that guarantees that, in the axial direction, one duct module is immobilised with respect to the other one. The end of this cylindrical connection may either be flat or it may contain a folded tab, which does not have any annular flanges on the cylindrical surface.

Specifically, and with a view to simplifying the aforementioned invention, one of the sections of piping is perfectly cylindrical and there is no kind of annular flange on the surface of the cylinder, whereas the other section is truncoconical, receiving the first one under pressure or fitting into its core, thereby ensuring that one duct module cannot move in an axial direction with respect to the other one and also guaranteeing that the metal-to-metal is sealed by the elastic or permanent adaptation of the two surfaces that come together in the connection zone.

In the mixed version of the improvements that have been made to the invention, in addition to having the conical connection that has just been explained, the duct modules also overlap each other thanks to an extensive sector that is basically cylindrical in nature, in which either one of the modules or both of the modules simultaneously, have annular flanges so that they can be coupled under pressure to the other module, which can be facing either inwards or outwards without distinction, this depending on in which module or modules to be joined they are located.

A perfect fit is thus obtained between the duct modules via the unattached and cylindrical end of one of them and the truncoconical and supplementary section of the other, this being an impervious connection that is kept stable so that it can withstand any potential stress and not be prone to axial separation thanks to the supplementary annular flanges that are provided in the cylindrical and coaxial sectors.

### DESCRIPTION OF THE DRAWINGS

A set of drawings that is merely illustrative and in no way limiting has been enclosed to supplement the description that is being made, and these drawings have been included to help to make it easier to understand the characteristics of the invention, in accordance with a preferred embodiment thereof. The set of drawings comprises the following figures:
Figure 1.- This shows a side elevation and cross section of the connection of two tubular modules that feature the improvements that have been made to the invention, and to be specific with an example of a practical realisation in which the cylindrical module fits into the truncoconical and divergent end of the other one.
Figure 2.- This shows a representation that is similar to Figure 1, but for a practical realisation of a different kind, that is to say, one in which the truncoconical end of one of the modules fits into the cylindrical end of the other one.
Figures 3 and 4.- These show similar representations to those that are shown in Figure 1, in which the female element is extended beyond its truncoconical sector into a cylindrical sector that is linked to the other module by means of one or more annular flanges, the rib or ribs in Figure 3 being located on the outer module and the rib or ribs in Figure 4 being located on the inner module.
Figures 5 and 6.- These show similar representations to those that are shown in Figures 3 and 4, but in this case they are applied to a socketed connection solution that is similar to the one that is depicted in Figure 2.
Figure 7.- This shows a connection solution that is equivalent to the one depicted in Figure 3, but with one or more annular ridges, one of which is on the outer or surrounding piece, whereas the other one is on the inner piece.
Figure 8.- This final drawing shows a realisation that is similar to the one shown in Figure 5 but in which, as is the case in the preceding figure, there are also one or more annular flanges, one of which is on the outer or surrounding module, while the other one is on the inner module.

### REALISATION OF A PREFERRED EMBODIMENT OF THE INVENTION

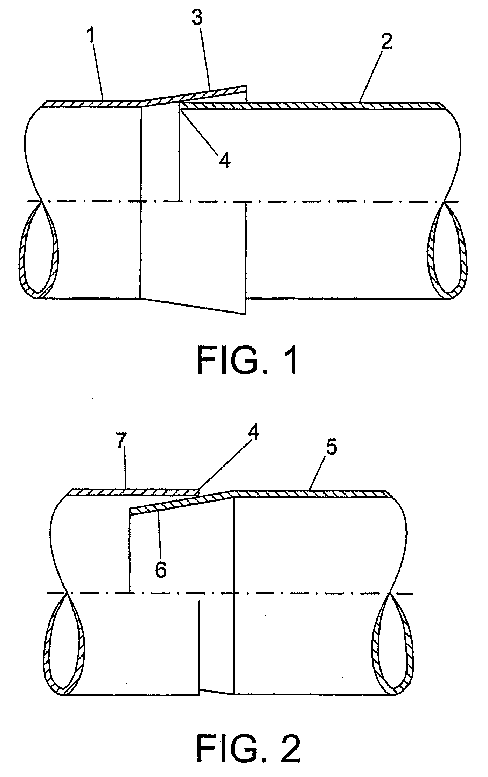

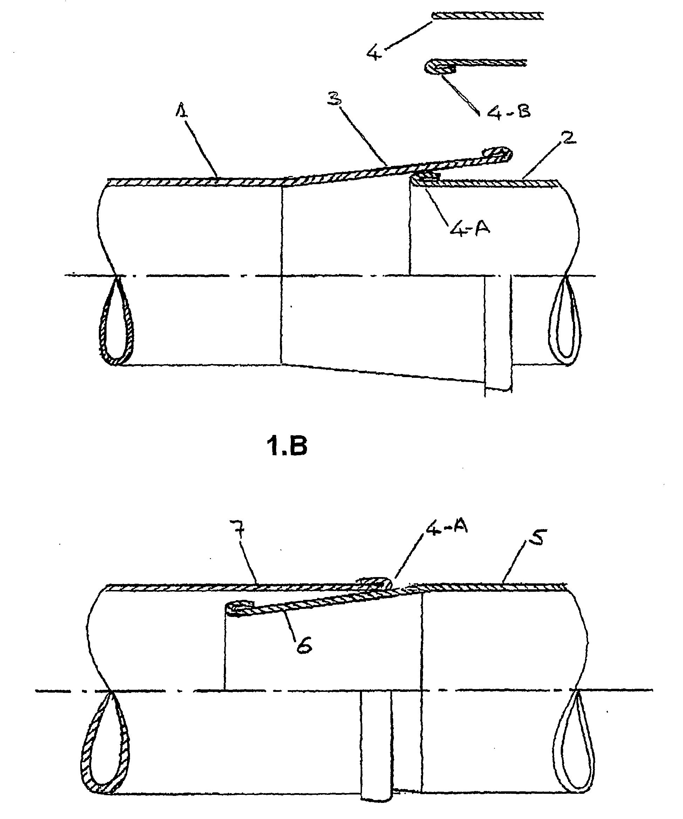

As has already been pointed out, Figures 1 and 2 show a simpler connection solution, in which, specifically in the case of Figure 1, of the two modules (1) and (2) to be coupled, module (1) has a truncoconical and divergent end (3) that, as it receives the free edge (4) of the module (2), which is either perfectly cylindrical or with a folded tab at the end, makes a perfect metal-to-metal fit that guarantees that the assembly is completely impervious, whereas in the case of Figure 2, which is also just as simple, of the two tubes that have to be joined (5 - 7), tube or module (5) ends in a truncoconical and convergent section (6) that fits into the cylindrical module (7), making a perfect fit with the free edge (4) of the latter, providing the same degree of imperviousness as in the previous case.

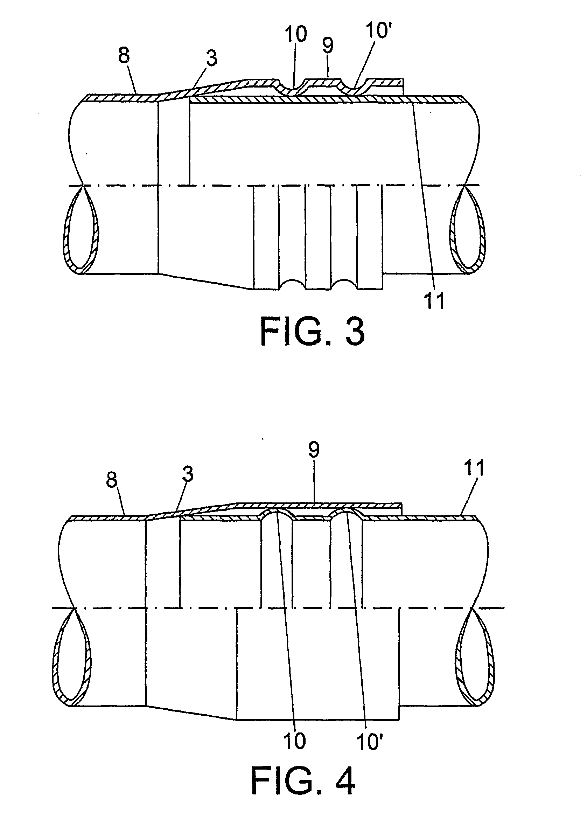

Using this same type of connection and in a way that is consistent with the drawing shown in Figure 3, it has been planned that module (8) that finishes in a truncoconical and divergent section (3) is extended beyond the latter into a sector that is basically cylindrical (9) equipped with one or more annular crimpings (10 - 10'), with a half-duct section, whose concavity facing outwards establishes two annular contact lines on the outer surface of the other module (11), perfectly cylindrical.

However, there is the possibility, shown in Figure 4, that with a structure that is similar to the one shown in the previous case, the crimpings (10 - 10') that establish the annular tangential lines are located on the inner tube (11), in this case with its concavity facing inwards, the cylindrical extension (9) of the module (8) not being misshapen in any way.

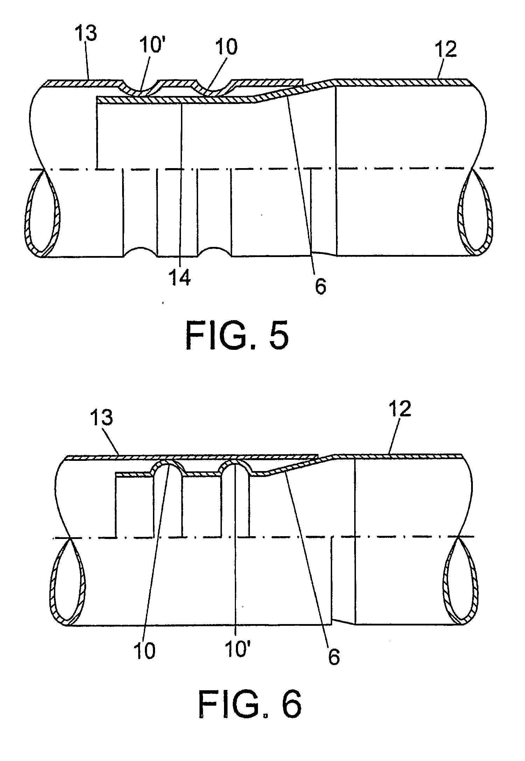

These same supplementary tangential lines located on cylindrical and coaxial sectors can be applied to the solution that is shown in Figure 2, as can be seen in Figures 5 and 6, that is to say, to the case in which one of the duct modules (12) contains a truncoconical and convergent sector (6) that fits into the other duct module (13), in such a way that in this case the truncoconical and convergent sector (6) is also extended into an end and cylindrical section (14), coaxial with the tube (13), which makes contact with the latter by means of one or more crimpings (10 - 10'), which can be located on the module (13), as is the case with Figure 5, or on the module (12) as in the case of Figure 6; in the first case with the concavity facing outwards and in the second case with the concavity facing inwards, as can be seen in the above-mentioned figures.

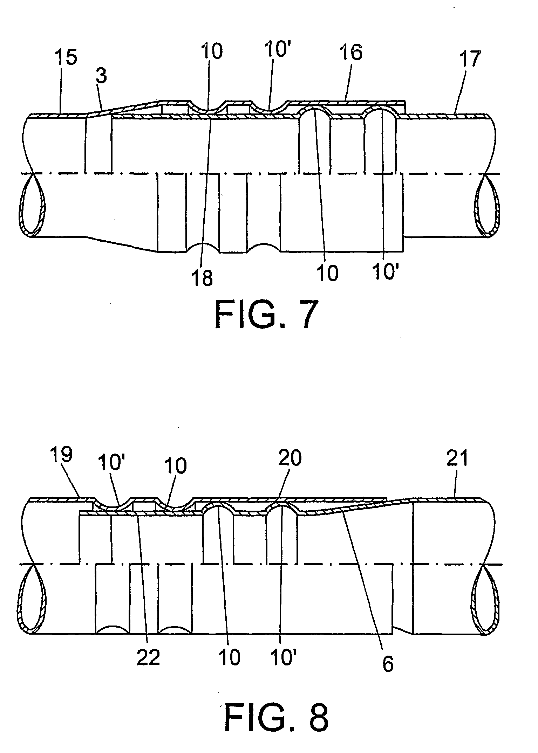

A solution such as the ones that are depicted in Figures 7 and 8 can be used if the intention is to achieve greater efficiency where the coaxial tie and the imperviousness are concerned.

In a more specific way in Figure 7, the initial structure is similar to the one that is shown in Figure 3, in which a module (15), equivalent to the module (8) in the aforementioned Figure 3, features a truncoconical and divergent section (3) beyond which there is a cylindrical sector (16) with a considerable axial elevation, the inner half of which has one or more outer grooves (10 - 10'), while the interior module (17), which fits into the module (15) until reaching the truncoconical section of this module, incorporating one or more annular flanges (10 - 10'), the purpose of which is to make contact with the outer surface of the end sector (16) of the module (15), and beyond which there is a cylindrical sector (18) with which the pressure exerted by the annular flanges (10 - 10') of the outer module or sheath (15) also comes into contact.

This socketed connection (12) can be obtained with the solution that is shown in Figure 8, which starts with a connection that is similar to the one that is shown in Figure 5, but in which the essentially cylindrical module (19) is extended beyond the annular and inner ribs (10 - 10') into another section that is also cylindrical (20) of the same diameter, which is the one whose unattached end lies on the truncoconical and convergent section (6) of the supplementary module (21), which has one or more annular flanges (10 - 10') beyond the aforementioned truncoconical and convergent sector (6), the former making contact under pressure with the cylindrical section (20) of the surrounding tube or module, and beyond the aforementioned annular flanges (10 - 10') a cylindrical section (22), that is smaller in diameter than the general diameter of the tube (21), the purpose of which is to make contact under pressure with the annular flanges (10 - 10') of the surrounding tube or module (19).

## Claims

1. ^{st}.- Improvements made to the patent for invention P200201060 "impervious connection system for chimneys and prefabricated modular ducts", in which at least one of the connection ends is truncoconical in shape and is socketed into the supplementary end, **characterised by** the fact that the connection end that is truncoconical is extended, beyond the aforementioned truncoconical sector (3 - 6), into a cylindrical sector that is coaxial with the other end of the connection, which has a different diameter, there being at least one annular flange (10-10') at this level, which has at least one annular tangential line and connection under pressure between the two modules.

2. ^{nd}.- Improvements made to the patent for invention P200201060 "impervious connection system for chimneys and prefabricated modular ducts", **characterised by** the fact that when one of the connection ends (3) has a truncoconical and divergent layout, the end of the other module (11) slots coaxially into it, creating the annular flanges (10 - 10') in the cylindrical section (9) of the surrounding module (8) or in the cylindrical and inner module (11,), in the first case with the aforementioned annular flanges (10 - 10') facing inwards, and in the second case facing outwards.

3. ^{rd}.- Improvements made to the patent for invention P200201060 "impervious connection system for chimneys and prefabricated modular ducts", as in the 1^{st} Claim, **characterised by** the fact that when one of the connection ends (6) has a truncoconical and divergent layout, in such a way that it fits into the core of the other module (13), the aforementioned truncoconical and convergent sector (6) is extended to form a cylindrical sector (14), whose diameter is smaller than that of the module (12) from which it comes and thus with a smaller diameter than the surrounding module (13), with respect to which it is coaxial, the annular flanges (10 - 10') being either on the surrounding module (13) or on the cylindrical extension (14) of the inner model, without distinction, in the first case with the aforementioned ribs facing inwards, and in the second case facing outwards.

4. ^{th}.- Improvements made to the patent for invention P200201060 "impervious connection system for chimneys and prefabricated modular ducts", as in the 2^{nd} Claim, **characterised by** the fact that the surrounding module (15), beyond its truncoconical and divergent sector (3) and its annular flanges (10-10') for connection with the inner module (17) is extended into a cylindrical sector (16) to the inner face of which other annular flanges are fitted (10 - 10'), in addition to the aforementioned ones, and in this case ones that emerge from the inner module (17) and are axially staggered with respect to the aforementioned ones.

5. ^{th}.- Improvements made to the patent for invention P200201060 "impervious connection system for chimneys and prefabricated modular ducts", as in the 3^{rd} Claim, **characterised by** the fact that the surrounding module (19), contains at least one annular flange (10 - 10') that lies at a considerable distance from its unattached end, beyond which there is a cylindrical sector (20), whereas after the truncoconical and convergent section (6) of the inner module (21), contains at least one annular flange (10 - 10') that acts upon the cylindrical sector (20) of the outer module (19), and beyond that a cylindrical and end sector (22), upon which the annular flanges (10 - 10') of the surrounding module (19) act.
